# EUROPEAN PATENT SPECIFICATION

(11) **EP 0 526 125 B1**
(45) Date of publication and mention of the grant of the patent: **07.01.1998**
(21) Application number: 92306791.2
(22) Date of filing: 24.07.1992
(51) Int. Cl.: B23B 29/02

(54) **Pull boring cutter head**
Bohrkopf
Tête de forage

(30) Priority: 26.07.1991 ZA 915881; 14.11.1991 ZA 919026
(43) Date of publication of application: 03.02.1993
(73) Proprietor: Ohmann, Jens, Magaliesburg, Transvaal (ZA)
(72) Inventor: Ohmann, Jens, Magaliesburg, Transvaal (ZA)
(74) Representative: Holdcroft, James Gerald, Dr.

(56) References cited:
- SU-A- 173 095
- US-A- 2 189 604
- US-A- 2 661 639
- US-A- 4 571 129
- Week B38, 31 October 1979 Derwent Publications Ltd., London, GB;
- PATENT ABSTRACTS OF JAPAN vol. 7, no. 165 (M-230)(1310) 20 July 1983
- PATENT ABSTRACTS OF JAPAN vol. 7, no. 55 (M-198)(1200) 5 March 1983
- Week C47, 7 January 1981 Derwent Publications Ltd., London, GB;

## Description

### INTRODUCTION

This invention relates to pull boring heads used in machining of bores in elongate tubular members. It is to be understood that wherever "pull boring" is referred to in this specification, that term is to be interpreted to include "push boring".

### BACKGROUND OF THE INVENTION

Pull boring has been known for many years and consists essentially of pulling a rotating cutter head axially through a tubular member to machine cut the inner surface of the member. The members being machined are usually of considerable length. It is also usually desirable that the machining operation be done speedily and give a desired fine surface finish. Preferably the operation should be a single cut operation.

Members which are machined in this way are borehole linings and cylinders for hydraulic piston and cylinder assemblies.

The cutter heads generally used today comprise a body adapted to be coupled to the driving shaft and carrying a series of cutter tips. The cutting edges of the tips extend radially and are parallel to the direction of travel in use. The cutting tips extend rearwardly from the cutting edges parallel to the axis of the cutter head.

There are a plurality of cutting tips, usually three, equally spaced apart around the periphery of the cutting head. The outer edges of the cutting tips provide bearing surfaces for the rotating cutter head in the member which is being bored.

The pull boring heads described cannot be operated at high speed or under heavy cutting conditions essentially because of the very limited bearing surface provided by the cutter tips. Use results in wear of the cutter tips further resulting in loss of gauge of the machined bore and still further the cutting tips tend to chatter. This in turn results in a poor quality finish to the bore, and further to a short cutting tip lifetime.

US-A-2,189,604 discloses a boring bar assembly illustratively for use in a bench or pillar drilling machine. The boring bar assembly has a rotary cutter body with cutters mounted to the end of a rotary shaft, which turns within a sleeve. Spaced from the cutters and extending out of slots in the sleeve are guide fingers or cat's-paws for engaging a bore being machined. The guide fingers are wedged radially outwardly by a suitably-biased cone interconnected within the sleeve. The sleeve, cone and guide fingers are non-rotational.

It is the object of this invention to provide a cutter head for pull boring operations which is more satisfactory than those referred to above.

### SUMMARY OF THE INVENTION

According to this invention there is provided a pull boring cutter head having a rotary body mounting at least one cutter tip projecting from the periphery of the body, characterised in that the said body also mounts a plurality of radially expandable wedge shaped support blocks located in radially and longitudinally extending slots and co-operating with wedge shaped fingers projecting into the longitudinally extending slots from a rigid member axially movable relative to the body under a bias such that the support blocks project from the body behind the cutting tips in the direction of cutting.

Further features of this invention provide for there to be a multiplicity of cutting tips spaced around the periphery of the body, for the support blocks to be regularly interspersed between the cutting tips and for there to be a minimum of three cutting tips and support blocks.

The invention also provides for the bias to be provided by spring loading or pneumatic or hydraulic piston and cylinder assemblies.

Still further features of this invention provide for the blocks to be of a suitable wearable material such as nylon or that sold under the trade mark "Tuffnol" for example, and for the spring loading when used to be provided by an assembly of disc springs or coil springing.

### BRIEF DESCRIPTION OF THE DRAWINGS

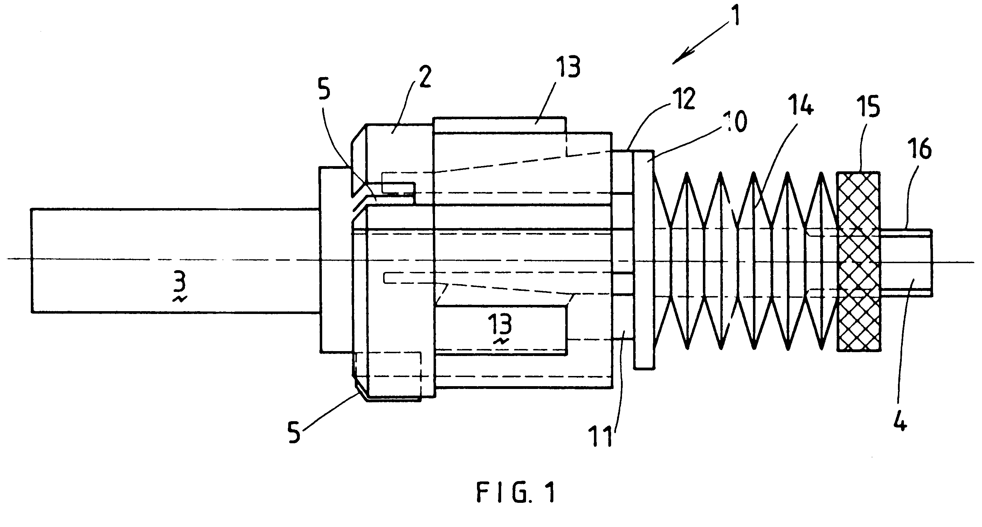

These and other features of an embodiment of this invention will become apparent from the following description of a preferred example of the invention wherein reference is made to the accompanying drawings in which
- Fig 1: is an elevation of the tool and

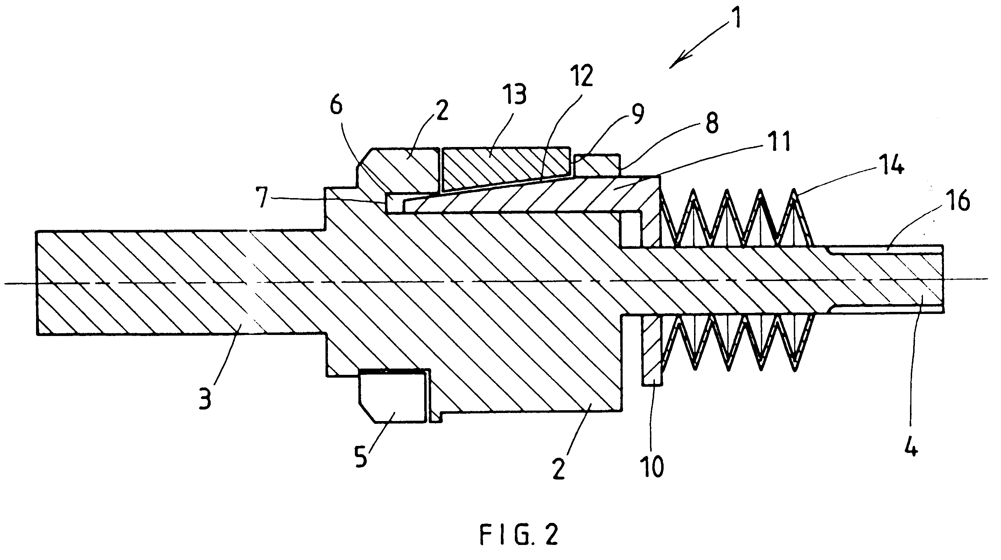

- Fig 2: a similar view in section.

### DETAILED DESCRIPTION OF THE DRAWINGS

As illustrated a pull boring tool (1) has a body (2) with axially aligned stems (3) and (4) projecting from each end. The forward stem (3) is adapted to be attached to the drive assembly for pulling the tool through the bore which is to be machined.

The body has cutting tips (5) fitted to extend radially from the body (2) and spaced equally apart around the periphery of the body. There are in this example three cutter tips and their arrangement and mounting in the body (2) is in substantially conventional manner.

Behind the cutter tips (5) in the direction of cutting the body has had longitudinally extending slots or pockets (6) formed therein. The inner surface (7) of each slot (6) is parallel to the axis of the body (2) but the outer surface (8) is stepped outwardly and rearwardly so that the forward end of the outer surface (8) is of smaller diameter than the rearward end which opens outwardly from the body (2).

Radial slots (9) extend from the outer surface of the body (2) into the slot (6). These slots (6) and (9) are symmetrically interspersed circumferentially between the cutter tips (5).

On the rearwardly projecting stem (4) is mounted a collar (10) which has fingers (11) projecting forwardly from the periphery of the collar. The fingers (11) are shaped to engage in the slots (6) and have their inner surface complementary to the inner surface (7) of the slots (6).

The outer surface (12) of the fingers are tapered rearwardly and outwardly at an angle of about 7½ degrees. The thickness of the fingers is such that they may be moved into the slots (6) while the outer surfaces provides wedge-shapes into slots (6).

Support blocks (13) of wearing material such as "Tuffnol" are fitted into slots (6) to project a small distance beyond the outer surface of the body (2). These blocks (13) have their outer surfaces shaped to conform approximately to the required bore that the tool is to be used to cut. This is not essential as the material of the blocks will wear to the desired shape during use.

Rearwardly of the collar (10) is an assembly of disc springs (14) on the stem (4). These are held on the stem by a nut (15) which engages on the screw thread (16) provided on the end of the stem (4). Rotation of the nut (15) causes the springs (14) to apply a bias to the collar (10) which tends to move forwardly along the stem (4). Any such movement causes the fingers (11) to force the support blocks radially outwards.

In use the cutter body is set up for a boring operation in the usual way. However as the body enters the bore cut in the tubular member being machined the cutter body is supported in the bore by the support blocks (13). Adjustment of the nut (15) ensures firm contact between the blocks (13) and the machined bore. Wear of the support blocks (13) is taken up automatically by the outward pressure exerted on the blocks by the fingers (11) under the influence of the springs (14).

It has been been found that the cutter tool above described enables pull boring operations through long tubular members to be very satisfactorily effected. Heavy cuts have enabled finished bore size to be obtained with a single pass through the member. It has also been found that a satisfactory fine finish to the bored surface even for such articles as long hydraulic cylinders can be obtained without secondary cutting operations. Also it is not necessary to use expensive cutting oils with the tools. Ordinary water soluble oils have proved satisfactory.

The blocks (13) are inexpensive and simple to replace in the cutter body (2) as and when required.

It will be appreciated that the invention may be varied from the example above described. The number and arrangement of cutter tips and support blocks may differ as well as the material of the blocks. Also the biasing of the blocks may be effected in different ways using, for example, pneumatic or hydraulic pressure on the collar.

The invention provides a simple and effective means for enabling pull or push boring operations to be conducted in an efficient manner.

## Claims

1. A pull boring cutter head (1) having a rotary body (2) mounting at least one cutter tip (5) projecting from the periphery of the body (2), characterised in that the said body (2) also mounts a plurality of radially expandable wedge shaped support blocks (13) located in radially and longitudinally extending slots (9, 6) in the body and co-operating with wedge shaped fingers (11) projecting into the longitudinally extending slots (6) from a rigid member (10) axially movable relative to the body (2) under a bias such that the support blocks (13) project from the body (2) behind the cuttings tip(s) (5) in the direction of cutting.

2. A pull boring cutter head as claimed in claim 1 in which a multiplicity of cutting tips (5) are spaced around the periphery of the body (2) and the support blocks (13) are regularly interspersed between the cutting tips.

3. A pull boring cutter head as claimed in claim 2 which includes three cutter tips (5) and three support blocks (13).

4. A pull boring cutter head as claimed in claim 1 in which the biasing is resilient and provided by springs (14) or hydraulic or pneumatic means.

5. A pull boring cutter head as claimed in claim 4 in which the body (2) has axially aligned stems (3, 4) projecting from each end of the body (2) one (4) carrying the axially movable member (10) and the other (3) adapted to be connected to a drive assembly for the cutter head (1).

6. A pull boring cutter head as claimed in claim 4 in which the resilient biasing is provided by an assembly of disc springs (14).

7. A pull boring cutter head as claimed in any one of the preceding claims in which the support blocks (13) have bearing surfaces shaped to conform at least approximately to the bore required to be machined by the cutter head.

8. A pull boring cutter head as claimed in any one of the preceding claims in which the support blocks (13) are made from "Tuffnol" material.

## Patentansprüche

1. Bohrkopf (1) mit einem Rotationskörper (2), der mindestens ein Schneidenplättchen (5) trägt, das von der Peripherie des Körpers (2) vorspringt,
dadurch gekennzeichnet, daß der Körper (2) auch eine Vielzahl von radial ausdehnbaren, keilförmigen Stützklötzen (13) trägt, die in radial und longitudinal sich erstreckende Nuten (9, 6) in dem Körper geordnet sind und mit keilförmigen Fingern (11) zusammenwirken, die von einem starren Bauteil (10) in die sich longitudinal erstreckende Nuten (6) vorspringen und unter Vorspannung relativ zu dem Körper (2) derart axial bewegbar sind, daß die Stützklötze (13) von dem Körper (2) in Richtung des Schneidens hinter den Schneidenplättchen (5) vorspringen.

2. Bohrkopf nach Anspruch 1, dadurch gekennzeichnet, daß eine Vielzahl von Schneidenplättchen (5) um den Umfang des Körpers (2) verteilt angeordnet sind und daß die Stützklötze (13) zwischen den Schneidenplättchen regelmäßig verteilt sind.

3. Bohrkopf nach Anspruch 2, dadurch gekennzeichnet, daß drei Schneidenplättchen (5) und drei Stützklötze (13) vorgesehen sind.

4. Bohrkopf nach Anspruch 1, dadurch gekennzeichnet, daß die Vorspannung federnd ist und durch Federnkraft (14) oder hydraulische oder pneumatische Mittel bewirkt wird.

5. Bohrkopf nach Anspruch 4, dadurch gekennzeichnet, daß der Körper (2) axial fluchtende Schafte (3, 4) aufweist, die sich von jedem Ende des Körpers (2) aus erstrecken, wobei ein Schaft (4) das axial bewegbare Bauteil (10) trägt und der andere Schaft (3) derart ausgebildet ist, daß er mit einer Antriebseinheit für den Bohrkopf (1) verbindbar ist.

6. Bohrkopf nach Anspruch 4, dadurch gekennzeichnet, daß die federnde Vorspannung durch eine Anordnung von Scheibenfedern (14) bewirkt wird.

7. Bohrkopf nach einem der vorhergehenden Ansprüche, dadurch gekennzeichnet, daß die Stützblöcke (13) Lagerflächen aufweisen, die derart ausgebildet sind, daß sie wenigstens annäherungsweise der mit dem Bohrkopf herzustellenden Bohrung angepaßt sind.

8. Bohrkopf nach einem der vorhergehenden Ansprüche, dadurch gekennzeichnet, daß die Stützblöcke (13) aus "Tuffnol"-Material hergestellt sind.

## Revendications

1. Tête de coupe pour aléser (1) comprenant un corps rotatif (2) recevant au moins une lame de coupe (5) en saillie par rapport à la périphérie du corps (2), caractérisée en ce que ledit corps (2) reçoit également plusieurs blocs de support (13) consommables radialement et en forme de coin, situés dans des fentes (9, 6) s'étendant longitudinalement et radialement dans le corps et coopérant avec des doigts (11) on forme de coin en saillie dans les fentes s'étendant longitudinalement (6) par rapport à un organe rigide (10) mobile axialement par rapport au corps (2) sous une sollicitation, de telle manière que les blocs de support (13) sont on saillie par rapport au corps (2) au-delà des lame(s) de coupe (5) dans la direction de coupe.

2. Tête de coupe selon la revendication 1, dans laquelle plusieurs lames de coupe (5) sont espacées autour de la périphérie du corps (2) et dans lequel les blocs de support (13) sont régulièrement intercalés entre les lames de coupe.

3. Tête de coupe selon la revendication 2, qui comprend trois lames de coupe (5) et trois blocs de support (13).

4. Tête de coupe selon la revendication 1, dans laquelle la sollicitation est élastique et fournie par dos ressorts (14) ou des moyens hydrauliques ou pneumatiques.

5. Tête de coupe selon la revendication 4, dans laquelle le corps (2) a des tiges (3, 4) axialement alignées et en saillie par rapport à chaque extrémité du corps (2), l'une (4) portant l'organe déplaçable axialement (10) et l'autre (3) étant adaptée pour être reliée à un ensemble d'entraînement de la tête de coupe (1).

6. Tête de coupe selon la revendication 4, dans laquelle la sollicitation élastique est fournie par un ensemble de ressorts à disque (14).

7. Tête de coupe selon l'une quelconque des revendications précédentes, dans laquelle les blocs de support (13) ont des surfaces d'appui formées de manière à correspondre au moins approximativement à l'alésage que la tête de coupe doit usiner.

8. Tête de coupe selon l'une quelconque des revendications précédentes, dans laquelle les blocs de support (13) sont réalisés en matériau 〈〈 Tuffnol 〉〉.
